# EUROPEAN PATENT SPECIFICATION

(11) **EP 4 131 671 B1**
(45) Date of publication and mention of the grant of the patent: **18.02.2026**
(21) Application number: 21778993.2
(22) Date of filing: 01.04.2021
(51) Int. Cl.: H01R 4/02, B23K 31/02, H01R 43/02

(54) **PROFILED CONNECTOR**
PROFILVERBINDER
CONNECTEUR PROFILÉ

(30) Priority: 01.04.2020 CN 202020456558 U
(43) Date of publication of application: 08.02.2023
(73) Proprietor: Jilin Zhong Ying High Technology Co., Ltd., Jilin 130000 (CN)
(72) Inventor: WANG, Chao, Changchun, Jilin 130000 (CN)
(74) Representative: Boult Wade Tennant LLP
(86) International application number: PCT/CN2021/084904
(87) International publication number: WO 2021/197415

(56) References cited:
- WO-A1-2014/168215
- WO-A1-2019/175210
- WO-A1-2020/011585
- CN-A- 107 104 292
- CN-A- 107 123 867
- CN-U- 204 156 176
- CN-U- 208 904 266
- CN-U- 208 904 266
- CN-U- 211 508 140
- DE-A1- 102014 012 489
- FR-A1- 2 923 739
- JP-A- 2015 118 832
- JP-A- 2016 035 872
- US-A1- 2013 059 473
- US-A1- 2019 319 375
- US-B2- 9 475 440

## Description

### TECHNICAL FIELD

The present disclosure relates to the technical field of terminal connection, and in particular to a special-shaped joint.

### BACKGROUND

At present, due to the increasing functions of various electrical devices, the installation position and installation space of the installation joint of the power distribution wire harness are more restricted, thus the angle between the cable and the terminal of the wire harness joint needs to be adjusted according to actual installation requirements. However, since the cable of the wire harness is generally a multi-core conductor, it is soft and cannot be bent at a specified angle. Therefore, the angle between the cable and the terminal of the wire harness joint in the prior art is generally 180°, which cannot be used for electrical devices with specific installation requirements, thus seriously affecting the application range of the wire harness joint.

In addition, in order to realize the angular connection between the terminal and the cable, the method in the prior art is to process an end of the terminal for fixing a cable and another end of the terminal for fixing an electrical device to have an included angle. The specific production method is: the terminal is firstly processed into a terminal with an included angle of 180°, and then the terminal with the included angle of 180° is bent into a terminal with other angles by bending. However, due to the problems of bending equipment and the rebound of the terminal itself, it is difficult to ensure the accuracy of the angle of the bent terminal. Moreover, in the process of bending the terminal with the included angle of 180°, the inner wall of the terminal will be compressed and the outer wall will be stretched, such that the internal stress at the bent position of the terminal with the included angle of 180° is extremely concentrated, which may cause the bent terminal to break at the bent position during use, thus leading to the invalid of the bent terminal and even a burning accident in serious cases.

Patent application CN 208904266U discloses a power line, a power supply assembly and an unmanned aerial vehicle. The power line includes a connecting terminal and a core wire, the connecting terminal is used for being electrically connected with an electrode terminal of the power board, and the connecting terminal is provided with a first through hole and a second through hole communicated with the first through hole. The core wire is arranged in the first through hole in a penetrating manner and is fixed on the connecting terminal through the second through hole, and an included angle is formed between the core wire and the connecting terminal.

Patent application WO 2020011585A1 discloses a method for connecting an electric conductor to an electric contact element to be connected in a plug-in manner to a mating contact element, an end of the electric conductor is shaped into a rigid surface section forming a surface and the contact element is then fastened to the surface of the rigid surface section.

Patent application FR 2923739A1 discloses a welding part in which a part of welding intended to be welded with a second part of welding to form an assembly made up of the first and second parts welded together. The first part of welding includes an external surface forming the interface intended to come in contact with the second part from welding after welding, and in what this surface external of welding forming interface of the first part of welding is surrounded by means of sealing, in particular a seal or a mould.

Patent application WO 2019175210A1 discloses a first metal cable having a flat upper and a flat lower surface, including at least one hollow riser extending approximately 90 degrees from one of the flat surfaces of the first metal cable, the hollow riser being configured to house an end of a second metal cable. A connected structure including a first metal cable wherein a second metal cable is inserted into the hollow riser of the first metal cable and joined with the first metal cable.

Patent application WO 2014168215A1 discloses a joining structure obtained by an electrical wire joining section having a joining surface perpendicular to the direction of extension of a terminal being formed at one end of the terminal, and the tip of a core wire exposed from an insulating covering of an electrical wire being ultrasonically joined to the joining surface.

Patent application JP 2016035872A discloses a method of manufacturing an electrical wire with a terminal that is excellent in connection reliability. A method of manufacturing an electrical wire with a terminal that has an electrical wire having a twisted wire constructed by plural element wires, and a terminal having a cylindrical portion fixed to the electrical wire at one end of the terminal includes a first step S20 for inserting an end portion of the twisted wire to the cylindrical portion, a second step S30 for pinching the cylindrical portion by a pair of electrodes and a third step S40 for applying voltages to the electrodes.

Patent application US 9475440B2 discloses an electrical connection console for a motor vehicle on-board electrical system including a cable having a metallic conductor and an electrical tap connected to the conductor electrically and mechanically. A decentral on-board electrical system structure is facilitated by the tap being formed from a metallic flat part and a metallic connection bolt formed with the flat part in a material bond, and by the flat part being materially bonded to the conductor in a connection region of the conductor, wherein the connection region is arranged between the ends of the cable.

Patent application US 2019319375A1 discloses a connection of a strand conductor to a connecting part, via an end of the strand conductor and a connecting part materially connected to the end of the strand conductor, wherein one end face of the end of the strand conductor is welded to the connecting part by means of ultrasound. A particularly good weld seam is achieved by first welding the end of the strand conductor to a sleeve using ultrasonic welding.

Patent application US20130059473A1 discloses a connection of an electrical cable consisting of a plurality of wires or strands to a terminal, in particular for the electrical system of a motor vehicle, having a support sleeve which encloses an end area of the cable and serves to accommodate an end face of the cable, so that the wires or strands are held in the support sleeve, wherein the face side of the cable consisting of the individual wires or strands is welded to the terminal by means of an at least face side weld seam. A particularly simple connection is then possible if the terminal is hollow on the side opposite the weld seam.

Therefore, in the technical field of terminal connection, there is an urgent need for a special-shaped joint which can be applied to various types of electrical devices at various installation angles.

### SUMMARY

In order to overcome the defects of the prior art, the present disclosure provides a special-shaped joint, according to claim 1, which has simple structure, convenient assembly and wide application range.

The invention is set out in the appended set of claims. Any references to inventions or embodiments not falling within the scope of the independent claims are to be interpreted as examples useful for understanding the invention.

Compared with the prior art, the present disclosure has advantageous effects as follows:
the present disclosure discloses a special-shaped joint including at least one connection terminal for connecting an electrical device, and at least one wire; the connection terminal is connected to a core of the wire, so the special-shaped joint has a simple structure and is easy to assemble; an included angle between the connection terminal and the core is greater than 0 degree and smaller than 180 degrees, so that the special-shaped joint can be applied to the electrical device with a specific connection requirement for the included angle between the connection terminal and the wire, thus having a wide application range and breaking the limitation of the wire harness joint of the prior art in practical use.

The above description is merely an overview of the technical features of the present disclosure. In order to better understand the technical features of the present disclosure and implement the technical features according to the specification, and in order to make the above and other objects, features, and advantages of the present disclosure be easier to understand, detailed description will be given below by combining exemplary embodiments in conjunction with the accompanying drawings.

### BRIEF DESCRIPTION OF THE DRAWINGS

FIG. 1 is a structural schematic of a first exemplary embodiment of a special-shaped joint that does not form part of the invention;
FIG. 2 is a structural schematic of a second exemplary embodiment of a special-shaped joint that does not form part of the invention;
FIG. 3 is a structural schematic of a third exemplary embodiment of a special-shaped joint that does not form part of the invention;
FIG. 4 is a structural schematic of a fourth exemplary embodiment of a special-shaped joint that does not form part of the invention;
FIG. 5 is a structural schematic of a special-shaped joint according to the present invention;
FIG. 6 is a structural schematic of a transfer terminal of FIG. 5.

### Reference numerals:

1. connection terminal; 2. core; 3. insulation layer; 4. wire; 5. transfer terminal.

### DETAILED DESCRIPTION

In order to further illustrate the technical features and effect of the present disclosure for achieving the intended objective of the present disclosure, specific embodiments, structures, features and functions thereof according to the present disclosure will now be described in detail with reference to the drawings and exemplary embodiments.

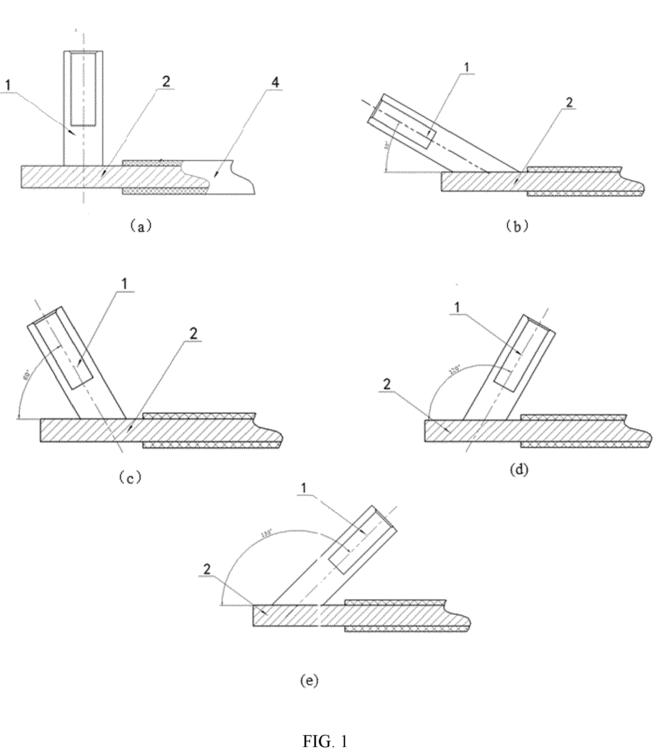

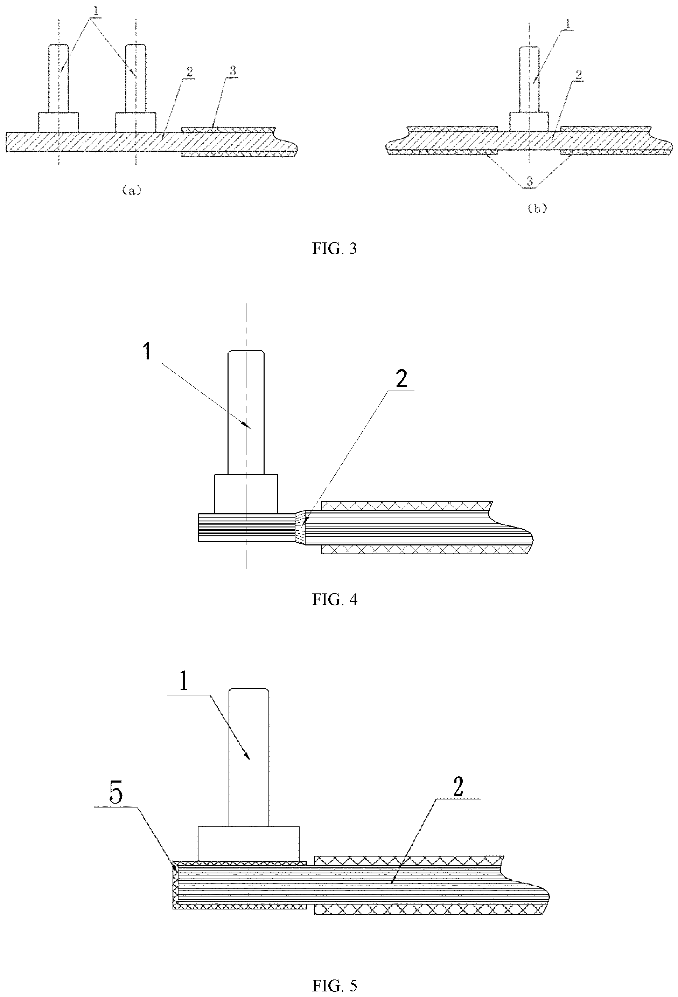

Independent claim 1 has been amended by limiting it to the features of the fifth embodiment (FIG. 5). Embodiments 1 to 4 (FIGS. 1 to 4 and 6(b)-6(c)) are not encompassed by the wording of the claims.

### The First Embodiment

FIG. 1 shows a first exemplary embodiment of the special-shaped joint that does not form part of the invention, including at least one connection terminal 1 for connecting an electrical device and at least one wire 4. The connection terminal 1 is connected to a core 2 of the wire 4, and an included angle between the connection terminal 1 and the core 2 is greater than 0 degree and smaller than 180 degrees. The special-shaped joint of the present disclosure has a simple structure and is easy to assemble, and can be applied to an electrical device with a specific connection requirement for the included angle between the connection terminal 1 and the wire 4, thus having a wide application range.

It should be noted that, in the present disclosure, the included angle between the connection terminal 1 and the core 2 is any angle value between 0° and 180° (not including end point values). As an example, (a) to (e) of FIG. 1 respectively show structural schematics of the special-shaped joint with the angle between the connection terminal 1 and the core 2 being 90°, 30°, 60°, 120° and 135°. In actual use, the angle between the connection terminal 1 and the core 2 of the special-shaped joint can be set according to actual installation requirements of the electrical device and the special-shaped joint.

In this embodiment, the number of the connection terminal 1 and the number of the wire 4 are both one.

As a further exemplary technical solution, the material of the core 2 is aluminum, aluminum alloy, copper or copper alloy. This is because copper and aluminum are both excellent electrical conductor materials, wherein (1) the resistivity of copper is 1.75×10-8Ωm, which is second only to silver among the commonly used conductive metals in nature, therefore, the cores of most wires are made of copper; however, since the material of pure copper is soft and has poor mechanical properties, as a more exemplary solution, the material of the core 2 is a copper alloy; (2) the resistivity of aluminum is 2.83×10-8Ωm, and aluminum is lighter and cheaper than copper; however, since the material of pure aluminum is soft and has poor mechanical properties, as a more exemplary technical solution, the material of the core 2 is an aluminum alloy.

In this embodiment, the core 2 is a single solid conductor. Moreover, the solid conductor and the connection terminal 1 are connected by one selected from the group consisting of friction welding, resistance welding, ultrasonic welding, electromagnetic welding, pressure diffusion welding, arc welding, and laser welding, which will be described below.
(1) The friction welding is to perform welding using friction welding equipment, which rotates a first workpiece and causes a second workpiece to apply pressure to the rotating first workpiece, so heat is generated by friction and the first and second workpieces are welded together by the pressure, thereby having advantages of fast welding speed without pollution such as noise, smoke, and strong light.
(2) The resistance welding uses resistance heat generated by the current passing through weldments and the contact place thereof as a heat source to heat the weldments locally, and at the same time, pressure is applied for welding. The advantages are that no filler metal is required, the productivity is high, the deformation of the weldment is small, and the automation is easy to realize.
(3) The ultrasonic welding is to transmit high frequency vibration waves to surfaces of two objects that need to be welded. Under pressure, fusion between the molecular layers is formed by rubbing the surfaces of the two objects against each other, which has the advantages of short welding time, no need of any flux, gas, solder, no spark for welding, environmental protection and safety.
(4) The electromagnetic welding is to generate a strong magnetic field by utilizing instantaneous electric current, such that weldments are welded together under the action of magnetic field force, which has the advantages of non-contact welding, high welding speed, low welding internal stress and high machining precision.
(5) The pressure diffusion welding is to press two weldments together, and metallurgically connect the weldments by interatomic diffusion through heat preservation, which has advantages that the weldments are not overheat or melted, the quality of the welding joint is high, a large-area weldment can be welded, the welding precision of the weldments is high, and the deformation is small.
(6) The arc welding is a physical phenomenon using an electric arc as a heat source and discharging electricity utilizing air, to convert the electric energy into the heat and mechanical energy required for welding, so as to achieve the purpose of connecting metal. The arc welding has advantages that the welding environment is not limited, and it is suitable for welding weldments with various metal materials, various thicknesses and various structural shapes. Plasma welding, as a kind of arc welding, can be used to realize precise welding. The plasma arc has concentrated energy, high productivity, fast welding speed, small stress deformation and more stable arc.
(7) The laser welding is to perform welding by using heat generated by bombarding the weldment with a focused laser beam as an energy source. Due to the optical properties of laser, such as refraction and focusing, laser welding is very suitable for the welding of micro parts and parts with poor accessibility.

As an exemplary technical solution, as shown in FIG. 1 (a), the angle between the connection terminal 1 and the core 2 is 90 degrees. In the special-shaped joint disclosed by the present disclosure, the connection terminal 1 and the core 2 may be vertically connected by one selected from the group consisting of friction welding, resistance welding, ultrasonic welding, electromagnetic welding, pressure diffusion welding, arc welding, and laser welding. Therefore, the angle between the connection terminal 1 and the core 2 of the special-shaped joint can achieve higher accuracy. Moreover, the special-shaped joint does not need to be subjected to bending treatment, so it has a longer service life compared with the connection terminal with 90 degrees in the prior art.

In order to demonstrate the influence of the connection terminal with 90 degrees formed by bending in the prior art and the special-shaped joint with 90 degrees in the present disclosure on mechanical properties and electrical properties of the wire harness joint, the inventor has conducted a series of experiments on the mechanical properties, electrical properties and service life of the wire harness joints including the above two different connection terminals respectively and the same kind of wires. The experimental results are shown in Table 1.

**Table 1: the influence of the connection terminal with 90 degrees formed by bending and the special-shaped joint with 90 degrees on the pulling force and voltage drop of the wire harness joints**

| **Terminal type** | **Connection terminal with 90 degrees** | | **Novel special-shaped joint with 90 degrees** | | **Connection terminal with 90 degrees** | | **Novel special-shaped joint with 90 degrees** | |
|---|---|---|---|---|---|---|---|---|
| **State** | **After wire harness joint is made** | | | | **After aging test for 6000 hours** | | | |
| Test | Pulling force (N) | Voltage drop (mV) | Pulling force (N) | Voltage drop (mV) | Pulling force (N) | Voltage drop (mV) | Pulling force (N) | Voltage drop (mV) |
| 1 | 2645 | 0.36 | 3125 | 0.31 | 2156 | 0.43 | 2686 | 0.37 |
| 2 | 2561 | 0.34 | 3086 | 0.32 | 2138 | 0.46 | 2743 | 0.38 |
| 3 | 2772 | 0.36 | 3145 | 0.31 | 2182 | 0.45 | 2756 | 0.35 |
| 4 | 2744 | 0.38 | 3258 | 0.31 | 2162 | 0.46 | 2835 | 0.36 |
| 5 | 2642 | 0.36 | 3182 | 0.32 | 2084 | 0.43 | 2846 | 0.38 |
| 6 | 2665 | 0.38 | 3143 | 0.31 | 2126 | 0.46 | 2913 | 0.37 |
| 7 | 2785 | 0.37 | 3244 | 0.33 | 2067 | 0.45 | 2694 | 0.36 |
| 8 | 2556 | 0.36 | 3081 | 0.29 | 2085 | 0.44 | 2789 | 0.36 |
| 9 | 2683 | 0.37 | 3168 | 0.30 | 2164 | 0.45 | 2775 | 0.38 |
| 10 | 2659 | 0.37 | 3192 | 0.31 | 2187 | 0.46 | 2864 | 0.35 |
| Average value | 2671.2 | 0.37 | 3163.1 | 0.311 | 2135.1 | 0.449 | 2790.1 | 0.366 |

From the results of the above Table 1, the pulling force of the wire harness joint including the connection terminal with 90 degrees that is formed by bending in the prior art is significantly lower than that of the wire harness joint including the special-shaped joint with 90 degrees of the present disclosure. Moreover, after aging test for 6000 hours, the pulling force value of the wire harness joint including the connection terminal with 90 degrees that is formed by bending in the prior art is reduced, and the voltage drop value is increased, and unqualified products are prone to appear, which may result in function failure of the wire harness joint. However, the pulling force value and the voltage drop value of the wire harness joint including the special-shaped joint with 90 degrees of the present disclosure still meet the requirements of mechanical and electrical properties of the wire harness joint, and can ensure the function of the wire harness joint to be stable and reliable.

In this embodiment, as shown in FIG. 1, the connection terminal 1 is a hollow cylinder, and the cross section of the internal cavity of the connection terminal 1 is circular or oval or polygonal or special-shaped, such that the special-shaped joint can be connected with electrical devices having different plug ends. Moreover, if the cross section of the internal cavity of the connection terminal 1 is circular, the inner wall of the internal cavity of the connection terminal 1 is smooth or provided with an internal thread.

In specific connection, if the plug end of the electrical device is a cylinder with a smooth outer wall, the cross section of the internal cavity of the connection terminal 1 is circular, and the inner wall of the internal cavity is smooth. If the plug end of the electrical device is a cylinder with external thread on the outer wall, the cross section of the internal cavity of the connection terminal 1 is circular, and the inner wall of the internal cavity is provided with internal threads matching the external threads. If the plug end of the electrical device is a regular prism, the cross section of the internal cavity of the connection terminal is a regular polygon matching the regular prism.

### The Second Embodiment

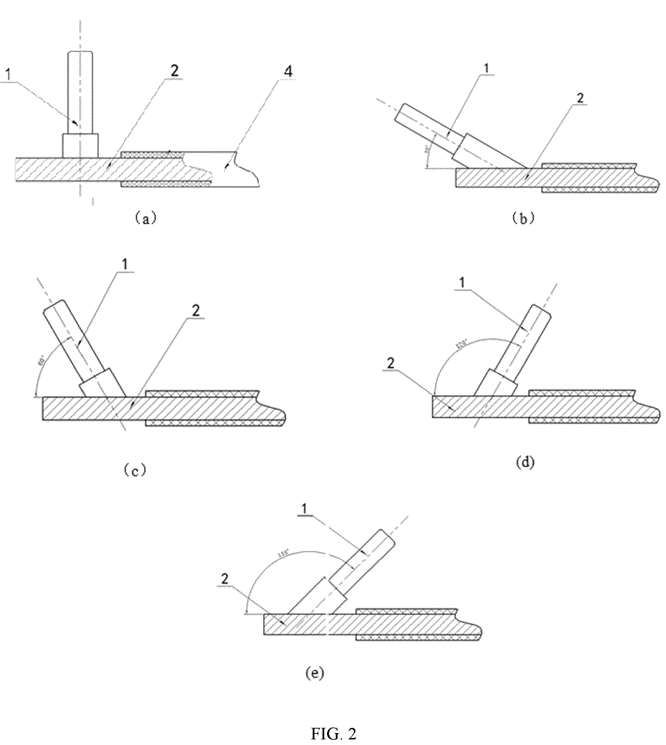

As shown in FIG. 2, the difference between the present embodiment and the first embodiment is only that the connection terminal 1 is a solid cylinder with a circular, elliptical, polygonal, or special-shaped cross section.

In specific connection, if the plug end of the electrical device is a circular plug groove with a smooth inner wall, the connection terminal is a cylinder with a circular cross section and a smooth outer wall. If the plug end of the electrical device is a circular plug groove whose inner wall is provided with internal threads, the connection terminal is a cylinder, and the external surface of the connection terminal is provided with external threads matching the internal threads. If the connection terminal is a regular prism, the plug end of the electrical device is a plug groove matching the regular prism.

### The Third Embodiment

The difference between this embodiment and the second embodiment only lies in that, as shown in FIG. 3, the number of the connection terminals 1 and the wires 4 is in plural, such as 2, 3, etc., and the specific number can be set according to the actual demand of the electrical device.

In addition, FIG. 3 only shows the structural schematic diagram of the special-shaped joint with the angle between the connection terminal 1 and the core 2 being 90 degrees. The included angle between the connection terminal 1 and the core 2 is any angle value between 0° and 180° (not including end point values), and can be set according to the actual installation requirements of the electrical device and the special-shaped joint.

As an example, as shown in (a) of FIG. 3, the number of the connection terminals 1 is two. Alternatively, as shown in (b) of FIG. 3, the number of the connection terminal 1 is one, and the connection terminal 1 is located in the middle of the wire 4.

### The Fourth Embodiment

The difference between this embodiment and the second embodiment only lies in that, as shown in FIG. 4, the core 2 is a multi-core conductor, and the multi-core conductor having a hard structure is connected to the connection terminal 1 by one selected from the group consisting of friction welding, resistance welding, ultrasonic welding, electromagnetic welding, pressure diffusion welding, arc welding, and laser welding.

And, the hard structure is formed from the multi-core conductor by one or more selected from the group consisting of ultrasonic welding, resistance welding, pressure diffusion welding, explosive welding, fusion welding, electromagnetic welding, arc welding, and laser welding.

### The Fifth Embodiment

The difference between this embodiment and the fourth embodiment only lies in that, as shown in FIG. 5, the hard structure also includes a transfer terminal 5 for connecting the multi-core conductor, and the hard structure is formed from the multi-core conductor and the transfer terminal 5 by one or more selected from the group consisting of crimping, ultrasonic welding, resistance welding, pressure diffusion welding, explosive welding, fusion welding, electromagnetic welding, arc welding, and laser welding.

When connecting the multi-core conductor and the transfer terminal 5, firstly the transfer terminal 5 and a plurality of thin wires of the multi-core conductor are formed into the hard structure by one or more selected from the group consisting of crimping, ultrasonic welding, resistance welding, pressure diffusion welding, explosive welding, fusion welding, electromagnetic welding, arc welding, and laser welding. In the hard structure, the distance between two adjacent thin wires is not greater than the diameter of the thin wire.

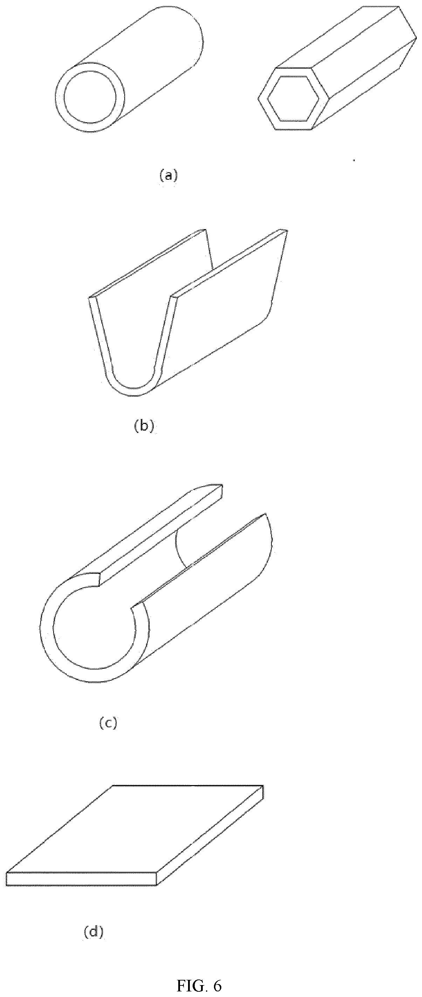

As shown in FIG. 6, the transfer terminal 5 is of a cylindrical structure, U-shaped structure, ring-shaped structure, or flat plate structure.
(1) As shown in (a) of FIG. 6, if the transfer terminal 5 is of a cylindrical structure, the core 2 of the wire 4 may be inserted into the internal hollow body of the transfer terminal 5; and then, by means of crimping or welding, the transfer terminal 5 is connected with the core 2. If the transfer terminal 5 is of a cylindrical structure, the transfer terminal 5 can be completely enclosed and connected to the core 2, so as to obtain a large contact area, strong connection, and good conductive effect.
(2) As shown in (b) and (c) of FIG. 6, if the transfer terminal 5 is of a U-shaped or ring-shaped structure, the core 2 of the wire 4 may be inserted into the transfer terminal 5, or the core 2 of the wire 4 may also be placed into the transfer terminal 5 through the opening of the transfer terminal 5, and then the core 2 and the U-shaped or ring-shaped connection terminal 5 are connected together by crimping or welding, which has high production efficiency and stable connection, thereby reducing production cost and improving production quality.
(3) As shown in (d) of FIG. 6, if the transfer terminal 5 is of a flat plate structure, the transfer terminal 5 and the core 2 are connected together by welding, which has simple structure, processing convenience, fast and convenient welding, high connection quality, and is suitable for metal connection of different materials.

## Claims

1. A special-shaped joint comprising at least one connection terminal (1) for connecting an electrical device and at least one wire (4), with the connection terminal (1) being connected to a core (2) of the wire (4), and an included angle between the connection terminal (1) and the core (2) being greater than 0 degree and smaller than 180 degrees;
wherein the core (2) is a multi-core conductor, and said joint comprises a hard structure that includes a transfer terminal (5) for connecting the multi-core conductor; said hard structure is formed from the multi-core conductor by one or more selected from the group consisting of ultrasonic welding, resistance welding, pressure diffusion welding, explosive welding, fusion welding, electromagnetic welding, arc welding, and laser welding;
wherein the transfer terminal (5) is of a cylindrical structure with an internal hollow body into which the core (2) is inserted, the transfer terminal (5) is a one-piece structure and is connected to a portion of the core (2) that is inserted into the internal hollow body;
**characterized in that**
said transfer terminal (5) encloses an end face of the core (2);
said transfer terminal (5) completely encloses said portion of the core (2) that is inserted into the internal hollow body; and
the core (2) is connected to an end face of the connection terminal (1) through a side surface of the transfer terminal (5).

2. The special-shaped joint according to claim 1, wherein the material of the core (2) is aluminum, aluminum alloy, copper or copper alloy.

3. The special-shaped joint according to claim 1, wherein the angle between the connection terminal (1) and the core (2) is 90 degrees.

## Patentansprüche

1. Speziell geformte Verbindungsstelle, die mindestens einen Verbindungsanschluss (1) zum Verbinden eines elektrischen Geräts und mindestens einen Draht (4) umfasst, wobei der Verbindungsanschluss (1) mit einem Kern (2) des Drahts (4) verbunden ist und ein eingeschlossener Winkel zwischen dem Verbindungsanschluss (1) und dem Kern (2) größer als 0 Grad und kleiner als 180 Grad ist;
wobei der Kern (2) ein mehradriger Leiter ist und die Verbindungsstelle eine harte Struktur umfasst, die einen Übertragungsanschluss (5) zum Verbinden des mehradrigen Leiters enthält; wobei die harte Struktur aus dem mehradrigen Leiter durch ein oder mehrere Verfahren gebildet ist, die aus der Gruppe ausgewählt sind, die aus Ultraschallschweißen, Widerstandsschweißen, Druckdiffusionsschweißen, Explosionsschweißen, Schmelzschweißen, elektromagnetischem Schweißen, Lichtbogenschweißen und Laserschweißen besteht;
wobei der Übertragungsanschluss (5) eine zylindrische Struktur mit einem inneren Hohlkörper aufweist, in den der Kern (2) eingeführt ist, und der Übertragungsanschluss (5) eine einteilige Struktur ist und mit einem Teil des Kerns (2) verbunden ist, der in den inneren Hohlkörper eingeführt ist;
**dadurch gekennzeichnet, dass**
der Übertragungsanschluss (5) eine Endfläche des Kerns (2) umschließt;
der Übertragungsanschluss (5) den in den inneren Hohlkörper eingeführten Teil des Kerns (2) vollständig umschließt; und
der Kern (2) über eine Seitenfläche des Übertragungsanschlusses (5) mit einer Endfläche des Verbindungsanschlusses (1) verbunden ist.

2. Speziell geformte Verbindungsstelle nach Anspruch 1, bei der das Material des Kerns (2) Aluminium, eine Aluminiumlegierung, Kupfer oder eine Kupferlegierung ist.

3. Speziell geformte Verbindungsstelle nach Anspruch 1, bei der der Winkel zwischen dem Verbindungsanschluss (1) und dem Kern (2) 90 Grad beträgt.

## Revendications

1. Joint de forme spéciale comportant au moins une borne de connexion (1) pour connecter un dispositif électrique et au moins un fil (4), la borne de connexion (1) étant connectée à une âme (2) du fil (4), et un angle inclus entre la borne de connexion (1) et l'âme (2) étant supérieur à 0 degré et inférieur à 180 degrés ;
dans lequel l'âme (2) est un conducteur multi-âme, et ledit joint comporte une structure dure qui inclut une borne de transfert (5) pour connecter le conducteur multi-âme ; ladite structure dure est formée à partir du conducteur multi-âme par un ou plusieurs sélectionnés dans le groupe consistant en soudage par ultrasons, soudage par résistance, soudage par diffusion sous pression, soudage par explosion, soudage par fusion, soudage électromagnétique, soudage à l'arc, et soudage laser ;
dans lequel la borne de transfert (5) est d'une structure cylindrique avec un corps creux interne dans lequel l'âme (2) est insérée, la borne de transfert (5) est une structure monobloc et est connectée à une partie de l'âme (2) qui est insérée dans le corps creux interne ;
**caractérisé en ce que**
ladite borne de transfert (5) enserre une face d'extrémité de l'âme (2) ;
ladite borne de transfert (5) enserre complètement ladite partie de l'âme (2) qui est insérée dans le corps creux interne ; et
l'âme (2) est connectée à une face d'extrémité de la borne de connexion (1) par une surface latérale de la borne de transfert (5).

2. Joint de forme spéciale selon la revendication 1, dans lequel le matériau de l'âme (2) est de l'aluminium, un alliage d'aluminium, du cuivre ou un alliage de cuivre.

3. Joint de forme spéciale selon la revendication 1, dans lequel l'angle entre la borne de connexion (1) et l'âme (2) est de 90 degrés.
